# EUROPÄISCHE PATENTSCHRIFT

(11) **EP 3 064 102 B1**
(45) Veröffentlichungstag und Bekanntmachung des Hinweises auf die Patenterteilung: **26.09.2018**
(21) Anmeldenummer: 16154242.8
(22) Anmeldetag: 04.02.2016
(51) Int. Cl.: A47J 31/44

(54) **KAFFEEAUTOMAT**
COFFEE MACHINE
MACHINE À CAFÉ

(30) Priorität: 03.03.2015 DE 102015203740
(43) Veröffentlichungstag der Anmeldung: 07.09.2016
(73) Patentinhaber: BSH Hausgeräte GmbH, 81739 München (DE)
(72) Erfinder: Zibret, Igor, 3327 Smartno ob Paki (SI); Ursej, Matjaz, 2382 Mislinja (SI); Lemez, Samo, 3327 Smartno ob Paki (SI)

(56) Entgegenhaltungen:
- WO-A2-2009/141421
- DE-A1- 19 526 593
- FR-A1- 2 382 877
- FR-A1- 2 992 155

## Beschreibung

Die vorliegende Erfindung betrifft einen Kaffeeautomaten mit einem Gehäuse und einem bodenseitig darin angeordneten Behälter, insbesondere eine Tropfschale, gemäß dem Oberbegriff des Anspruchs 1.

Gattungsgemäße Kaffeeautomaten sind mannigfaltig bekannt und besitzen ein im Wesentlichen quaderförmiges Gehäuse mit vertikalen Wänden. Aufgrund einer komplexen Wasser-/Wasserdampfführung innerhalb des Gehäuses, kann es bei Kaffeeautomaten gemäß dem Stand der Technik dazu kommen, dass Wasserdampf an den vertikalen Wänden kondensiert und in unkontrollierter Weise unten aus dem Gehäuse austritt, was oftmals mit einer Undichtigkeit des Kaffeeautomaten gleichgesetzt wird, obwohl es sich tatsächlich nur um kondensierten Wasserdampf handelt. Um ein unkontrolliertes Austreten von Wasser aus dem Gehäuse vermeiden zu können, werden deshalb bei gattungsgemäßen Kaffeeautomaten oftmals aufwändige Dichtmaßnahmen ergriffen, welche jedoch konstruktiv aufwändig und zudem teuer sind. Zudem ist aus der FR 2 992 155 A1 ein Kaffeeautomat bekannt, bei dem ein Wasserleitelement kondensierten Wasserdampf in einen Behälter leiten kann.

Die vorliegende Erfindung beschäftigt sich daher mit dem Problem, für einen Kaffeeautomaten der gattungsgemäßen Art eine verbesserte oder zumindest eine alternative Ausführungsform anzugeben, bei welcher insbesondere ein unerwünschtes Austreten von kondensiertem Wasserdampf vermieden werden kann.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, zumindest ein speziell ausgebildetes Wasserleitelement vorzusehen, an welchem bereits kondensierter Wasserdampf gesammelt und entlang welchem dieser kondensierte Wasserdampf in Form von Wasser geführt und einem bodenseitig in einem Gehäuse eines Kaffeeautomaten angeordneten Behälter zugeführt wird. Der erfindungsgemäße Kaffeeautomat besitzt dabei in bekannter Weise ein Gehäuse sowie den bodenseitig darin angeordneten Behälter, welcher beispielsweise als sogenannte Tropfschale ausgebildet sein kann. Das Gehäuse selbst besitzt im Wesentlichen vertikale Wände, an welchen bislang Wasserdampf in unerwünschter Weise kondensierte und nach unten abfloss, um an einer nicht kontrollierbaren Stelle aus dem Gehäuse auszutreten. Da die Wände des Gehäuses selbstverständlich kühler sind als der Wasserdampf, kondensiert dieser an den Wänden, um dann von dort nach unten abzufließen. Erfindungsgemäß ist deswegen im Bereich des Gehäuses zumindest ein Wasserleitelement vorgesehen, welches derart ausgebildet ist, dass es kondensierten Wasserdampf dem Behälter zuleitet. Dieser Wasserdampf kann dabei direkt an dem Wasserleitelement kondensieren oder aber an anderen Wänden des Gehäuses, um anschließend über das Wasserleitelement dem bodenseitigen im Gehäuse angeordneten Behälter zugeführt werden zu können. Mit dem erfindungsgemäßen Wasserleitelement kann insbesondere auf die bisher in diesem Bereich erforderliche, konstruktiv sehr aufwändige und damit auch teure Dichtung verzichtet werden, wobei trotzdem gewährleistet werden kann, dass kein unkontrollierter Wasseraustritt aus dem Gehäuse des Kaffeeautomaten erfolgt.

Erfindungsgemäß ist das wenigstens eine Wasserleitelement als im Wesentlichen horizontale oder leicht geneigte Platte mit einem sich oberhalb des Behälters befindlichen Rand ausgebildet, wobei an dem Rand selbst Aussparungen angeordnet sind. Ein in dieser Art ausgebildetes Wasserleitelement kann dabei sowohl zur Kondensation von aufsteigendem Wasserdampf als auch zur Ableitung desselben in Richtung des Behälters genutzt werden. Über die Aussparungen am Rand der Platte erfolgt ein Abtropfen des gesammelten bzw. kondensierten Wasserdampfs in den darunter angeordneten Behälter. Die Aussparungen am Rand der Platte können dabei zinnenartig ausgebildet sein, wobei die Platte selbst als kostengünstiges Kunststoffspritzteil hergestellt, und insbesondere sogar in einen Herstellungsvorgang eines Gehäuseteils integriert werden kann.

Zweckmäßig weisen die Aussparungen geneigte Seitenwände auf, die derart geneigt sind, dass zwei gegenüberliegende Seitenwände oben einen größeren Abstand zueinander aufweisen als unten. Hierdurch kann zuverlässig vermieden werden, dass an einer Unterseite der Platte entlang fließendes Wasser auf die Oberseite gelangt, da die die Seitenwände erreichenden Tropfen an der unteren scharfen Kante der Seitenwände in den darunter angeordneten Behälter abtropfen. Die geneigten Seitenwände sind dabei ebenfalls konstruktiv einfach herzustellen, insbesondere durch eine entsprechende Ausbildung des zugehörigen Kunststoffspritzgusswerkzeugs. Als besonders vorteilhaft hat sich hierbei ein Neigungswinkel α zwischen 20 und 50° zur Vertikalen herausgestellt.

Zweckmäßig weisen die Aussparungen in einer Draufsicht eine dreieckförmige bzw. V-förmige Gestalt auf. Alternativ können diese Aussparungen auch eine U-förmige oder eine rechteckförmige Gestalt besitzt, wobei selbstverständlich auch eine Kombination dieser Formen an einer einzigen Platte denkbar ist. Sämtlichen Ausführungsformen ist dabei jedoch gemein, dass die Seitenwände der einzelnen Aussparungen geneigt sind und zwar derart, dass die jeweilige Seitenwand mit der unteren Fläche der Platte einen spitzen Winkel einschließt. Hierdurch kann ein zuverlässiges Abtropfen gesammelten und abzuleitenden Wassers bzw. Wasserdampfs gewährleistet werden.

Bei einer weiteren vorteilhaften Ausführungsform der erfindungsgemäßen Lösung ist an zumindest einer Wand des Gehäuses ein eine Ablaufkontur bildendes weiteres Wasserleitelement zum Ableiten von an der Wand kondensiertem Wasserdampf angeordnet. Ein derartiges weiteres Wasserleitelement ist dabei derart ausgerichtet, dass es den an der zugehörigen Wand kondensierten und nach unten abfließenden Wasserdampf auffängt und dem darunter angeordneten Behälter bzw. der darunter angeordneten Platte zuleitet. Ein derartiges weiteres Wasserleitelement kann beispielsweise in der Art einer schrägen Rampen bzw. einer Rippe ausgebildet sein. Von besonderem Vorteil hierbei ist, dass ein solches weiteres Wasserleitelement zusätzlich als Aussteifungselement herangezogen werden kann, wodurch die Funktionalität des weiteren Wasserleitelements zusätzlich gesteigert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf einen Teil eines Gehäuses eines erfindungsgemäßen Kaffeeautomaten,
- Fig. 2: eine Detaildarstellung eines Randes eines erfindungsgemäßen Wasserleitelements mit unterschiedlich ausgebildeten Aussparungen.

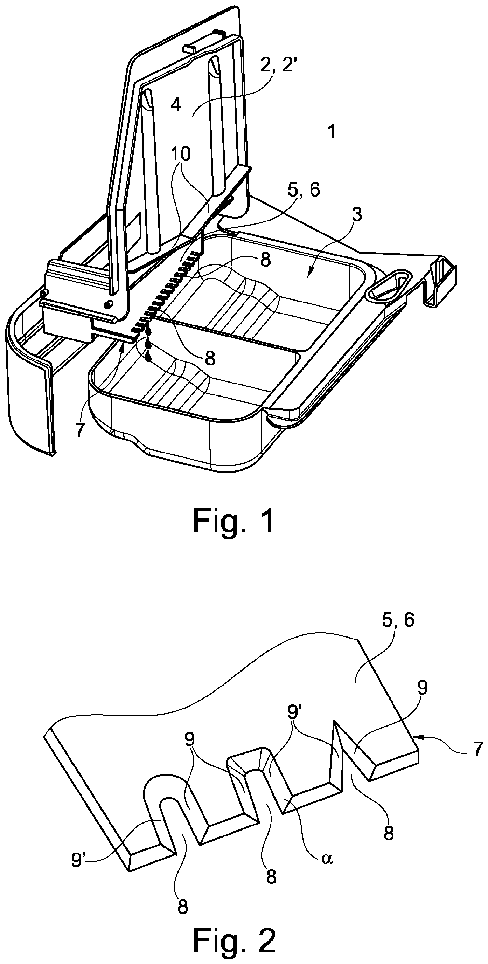

Entsprechend der Fig. 1 weist ein erfindungsgemäßer Kaffeeautomat 1 ein Gehäuse 2 auf, von welchem jedoch lediglich ein Gehäuseteil 2' gezeigt ist. Bodenseitig des Gehäuses 2 bzw. unterhalb des Gehäuseteils 2 ist dabei ein Behälter 3 angeordnet, welcher beispielsweise als Tropfschale ausgebildet sein kann. Darüber hinaus besitzt das Gehäuse 2 bzw. das Gehäuseteil 2' zumindest eine im Wesentlichen vertikale Wand 4. Erfindungsgemäß ist nun im Bereich des Gehäuses 2 zumindest ein Wasserleitelement 5 vorgesehen, welches derart ausgebildet ist, dass es kondensierten Wasserdampf dem Behälter 3 zuleitet und insbesondere ein unkontrolliertes Austreten desselben aus dem Gehäuse 2, welches oftmals mit einer Undichtigkeit des Kaffeeautomaten 1 gleichgesetzt wird, verhindert.

Betrachtet man die Fig. 1, so kann man erkennen, dass das zumindest eine Wasserleitelement 5 als im Wesentlichen horizontale oder leicht zur Horizontalen geneigte Platte 6 mit einem sich oberhalb des Behälters 3 befindlichen Rand 7 ausgebildet ist, wobei an dem Rand 7 Aussparungen 8 (vgl. auch die Fig. 2) angeordnet sind. Beispielsweise aus dem Behälter 3 aufsteigender Wasserdampf kann somit insbesondere an einer Unterseite der Platte 6 kondensieren, um dann zum Rand 7 hin abgeleitet zu werden und von dort in den darunter angeordneten Behälter 3 abzutropfen.

Betrachtet man den Rand 7 des zumindest einen Wasserleitelements 5, konkret der Platte 6, gemäß der Fig. 2 näher, so kann man erkennen, dass zwei gegenüberliegende Seitenwände 9, 9' geneigt sind und zwar derart, dass diese oben einen größeren Abstand zueinander aufweisen als unten. Die Seitenwand 9, 9' geht somit in einem spitzen Winkel α in die Unterseite der Platte 6 über. Als besonders vorteilhaft hat sich hierbei herausgestellt, wenn die Seitenwände 9, 9' um 20° < α < 50° zur Vertikalen geneigt sind. Hierdurch kann insbesondere ein nach oben Treten des kondensierten Wassers zuverlässig vermieden werden.

Betrachtet man die Fig. 2, so kann man erkennen, dass die Aussparungen 8 in einer Draufsicht, beispielsweise eine rechteckförmige Gestalt aufweisen können (mittlere Aussparung 8), eine dreieckförmige bzw. V-förmige Gestalt (rechte Aussparung 8) oder eine in einer Draufsicht U-förmige Gestalt (linke Aussparung 8). Selbstverständlich ist auch denkbar, dass eine beliebige Kombination derartiger Aussparungen an ein und derselben Platte 6 vorgesehen werden kann.

Betrachtet man nochmals die Fig. 1, so kann man erkennen, dass an der Wand 4 des Gehäuses 2 bzw. des Gehäuseteils 2' zusätzlich zumindest ein eine Ablaufkontur bildendes weiteres Wasserleitelement 10 zum Ableiten von an der Wand 4 kondensiertem Wasserdampf angeordnet ist. Das zumindest eine weitere Wasserleitelement 10 ist dabei derart ausgerichtet, dass es aufgefangenes Wasser dem darunter angeordneten Behälter 3 bzw. der darunter angeordneten Platte 6 zuleitet. Zusätzlich kann das zumindest eine weitere Wasserleitelement 10 auch als Aussteifungselement für die Wand 4 des Gehäuseteils 2' dienen. In dieser Art und Weise kann das weitere Wasserleitelement 10 beispielsweise als Rippe oder als Rampe ausgebildet sein.

Mit dem erfindungsgemäßen zumindest einen Wasserleitelement 5 ist es möglich, ein unkontrolliertes Aufsteigen von Wasserdampf im Gehäuse 2 zuverlässig zu vermeiden, da dieser beispielsweise bereits an dem Wasserleitelement 5 kondensiert und von dort wiederum dem Behälter 3 zugeleitet wird. Das zumindest eine Wasserleitelement 5 kann dabei insbesondere auch eine integralen Bestandteil der Wand 4 bzw. des Gehäuseteils 2' bilden und somit in einem gemeinsamen Kunststoffspritzgussvorgang mit diesem hergestellt werden, so dass keine Montage eines zusätzlichen Teils erforderlich ist, sondern lediglich die Änderung des Kunststoffspritzgusswerkzeugs. Von wesentlichem Vorteil bei dem erfindungsgemäßen Kaffeeautomaten 1 ist jedoch, dass keine zusätzlichen, aufwändigen und teuer zu montierenden Dichtelemente vorgesehen werden müssen, mittels welchen ein unkontrollierter Austritt von Wasserdampf vermieden werden soll. Die Aussparungen 8 können dabei in Entformungsrichtung des Kunststoffspritzgusswerkzeugs ausgerichtet sein und damit einfach hergestellt werden.

### Bezugszeichenliste

- 1: Kaffeeautomat
- 2: Gehäuse
- 3: Behälter
- 4: Wand
- 5: Wasserleitelement
- 6: Platte
- 7: Rand der Platte 6
- 8: Aussparung
- 9: Seitenwand der Aussparung 8
- 10: weiteres Wasserleitelement

## Patentansprüche

1. Kaffeeautomat (1) mit einem Gehäuse (2) und einem bodenseitig darin angeordneten Behälter (3), insbesondere einer Tropfschale, wobei das Gehäuse (2) im Wesentlichen vertikale Wände (4) aufweist, und wobei im Bereich des Gehäuses (2) zumindest ein Wasserleitelement (5) vorgesehen ist, welches derart ausgebildet ist, dass es kondensierten Wasserdampf dem Behälter (3) zuleitet, **dadurch gekennzeichnet, dass** das wenigstens eine Wasserleitelement (5) als im Wesentlichen horizontale oder leicht geneigte Platte (6) mit einem sich oberhalb des Behälters (3) befindlichen Rand (7) ausgebildet ist, wobei an dem Rand (7) Aussparungen (8) angeordnet sind.

2. Kaffeeautomat nach Anspruch 1, **dadurch gekennzeichnet, dass** die Aussparungen (8) geneigte Seitenwände (9,9') aufweisen, derart, dass zwei gegenüberliegende Seitenwände (9,9') oben einen größeren Abstand zueinander aufweisen als unten.

3. Kaffeeautomat nach Anspruch 2, **dadurch gekennzeichnet, dass** die Seitenwände (9,9') um 20° < α < 50° zur Vertikalen geneigt sind.

4. Kaffeeautomat einem der Ansprüche 1 bis 3, **dadurch gekennzeichnet, dass** die Aussparungen (8) in einer Draufsicht eine rechteckförmige Gestalt aufweisen.

5. Kaffeeautomat einem der Ansprüche 1 bis 4, **dadurch gekennzeichnet, dass** die Aussparungen (8) in einer Draufsicht eine dreieckförmige bzw. V-förmige Gestalt aufweisen.

6. Kaffeeautomat einem der Ansprüche 1 bis 5, **dadurch gekennzeichnet, dass** die Aussparungen (8) in einer Draufsicht eine U-förmige Gestalt aufweisen.

7. Kaffeeautomat einem der Ansprüche 1 bis 6, **dadurch gekennzeichnet, dass** an zumindest einer Wand (4) des Gehäuses (2) ein eine Ablaufkontur bildendes weiteres Wasserleitelement (10) zum Ableiten von an der Wand (4) kondensiertem Wasserdampf angeordnet ist.

8. Kaffeeautomat nach Anspruch 7, **dadurch gekennzeichnet, dass** das zumindest eine weitere Wasserleitelement (10) derart ausgerichtet ist, dass es aufgefangenes Wasser dem darunter angeordneten Behälter (3) oder der darunter angeordneten Platte (6) zuleitet.

9. Kaffeeautomat nach Anspruch 7 oder 8, **dadurch gekennzeichnet, dass** das zumindest eine weitere Wasserleitelement (10) als Aussteifungselement für die zugehörige Wand (4) ausgebildet ist.

## Claims

1. Coffee machine (1) with a housing (2) and a bottom-side container (3) arranged therein, in particular a drip shelf, wherein the housing (2) has substantially vertical walls (4), and wherein arranged in the region of the housing (2) is at least one water guiding element (5) which is embodied such that it feeds condensed water vapour to the container (3), **characterised in that** the at least one water guiding element (5) is embodied as a substantially horizontal or slightly inclined plate (6) with an edge (7) which is located above the container (3), wherein cut-outs (8) are arranged on the edge (7).

2. Coffee machine according to claim 1, **characterised in that** the cut-outs (8) have inclined side walls (9, 9') such that two opposing side walls (9, 9') have a greater distance from one another at the top than at the bottom.

3. Coffee machine according to claim 2, **characterised in that** the side walls (9, 9') are inclined by 20° < α < 50° relative to the vertical.

4. Coffee machine according to one of claims 1 to 3, **characterised in that** the cut-outs (8) have a rectangular form in a top view.

5. Coffee machine according to one of claims 1 to 4, **characterised in that** the cut-outs (8) have a triangular or V-shaped form in a top view.

6. Coffee machine according to one of claims 1 to 5, **characterised in that** the cut-outs (8) have a U-shaped form in a top view.

7. Coffee machine according to one of claims 1 to 6, **characterised in that** a further water guiding element (10) which forms a drainage contour is arranged on at least one wall (4) of the housing (2) for draining off water vapour condensed on the wall (4).

8. Coffee machine according to claim 7, **characterised in that** the at least one further water guiding element (10) is configured such that it feeds collected water to the container (3) arranged below or the plate (6) arranged below.

9. Coffee machine according to claim 7 or 8, **characterised in that** the at least one further water guiding element (10) is embodied as a reinforcement element for the associated wall (4).

## Revendications

1. Machine à café automatique (1) avec une carcasse (2) et un contenant (3) disposé à l'intérieur de celui-ci côté fond, en particulier un récolte-gouttes, dans laquelle la carcasse (2) présente des parois (4) essentiellement verticales, et dans laquelle au moins un élément d'acheminement d'eau (5) est prévu dans la zone de la carcasse (2), lequel est exécuté de telle sorte qu'il alimente le contenant (3) en vapeur d'eau condensée, **caractérisée en ce qu'**au moins un élément d'acheminement d'eau (5) est exécuté sous la forme d'une plaque (6) essentiellement horizontale ou légèrement inclinée avec un bord (7) se trouvant au-dessus du contenant (3), dans laquelle des évidements (8) sont disposés sur le bord (7).

2. Machine à café automatique selon la revendication 1, **caractérisée en ce que** les évidements (8) présentent des parois latérales inclinées (9, 9') de telle sorte que deux parois latérales opposées (9, 9') présentent, sur le dessus, un écartement supérieur à celui du dessous.

3. Machine à café automatique selon la revendication 2, **caractérisé en ce que** les parois latérales (9, 9') sont inclinées de 20°< α < 50°par rapport à la verticale.

4. Machine à café automatique selon l'une des revendications 1 à 3, **caractérisée en ce que** les évidements (8) présentent, en vue du dessus, une forme rectangulaire.

5. Machine à café automatique selon l'une des revendications 1 à 4, **caractérisée en ce que** les évidements (8) présentent, en vue du dessus, une forme triangulaire resp. de V.

6. Machine à café automatique selon l'une des revendications 1 à 5, **caractérisée en ce que** les évidements (8) présentent, en vue du dessus, une forme de U.

7. Machine à café automatique selon l'une des revendications 1 à 6, **caractérisée en ce qu'**un élément d'acheminement d'eau supplémentaire (10) formant profil d'écoulement est disposé sur au moins une paroi (4) de la carcasse (2) pour évacuer la vapeur d'eau condensée sur la paroi (4).

8. Machine à café automatique selon la revendication 7, **caractérisée en ce que** l'au moins un élément d'acheminement d'eau supplémentaire (10) est orienté de telle sorte qu'il dirige l'eau récoltée vers le contenant (3) disposé en-dessous ou la plaque (6) disposée en-dessous.

9. Machine à café automatique selon la revendication 7 ou 8, **caractérisée en ce que** l'au moins un élément d'acheminement d'eau supplémentaire (10) est exécuté sous la forme d'un élément de rigidification pour la paroi correspondante (4).
